# EUROPÄISCHE PATENTSCHRIFT

(11) **EP 0 506 613 B1**
(45) Veröffentlichungstag und Bekanntmachung des Hinweises auf die Patenterteilung: **24.04.1996**
(21) Anmeldenummer: 92810194.8
(22) Anmeldetag: 18.03.1992
(51) Int. Cl.: C08F 283/06, C08F 291/08, D06L 1/14, D06P 1/613, C11D 3/37

(54) **Gleitmittel enthaltende wässrige Zubereitungen von Mischpolymerisaten**
Aqueous preparations of copolymers containing lubricant
Préparations aqueuses de copolymères contenant un lubrifiant

(30) Priorität: 25.03.1991 CH 896/91; 21.05.1991 CH 1504/91
(43) Veröffentlichungstag der Anmeldung: 30.09.1992
(73) Patentinhaber: CIBA-GEIGY AG, CH-4002 Basel (CH)
(72) Erfinder: Kuhn, Martin, Dr., CH-4143 Dornach (CH); Ouziel, Philippe, F-68400 Riedisheim (FR); Berendt, Hans-Ulrich, verstorben (CH)

(56) Entgegenhaltungen:
- EP-A- 0 207 003
- EP-A- 0 316 792
- EP-A- 0 356 242
- CHEMICAL ABSTRACTS, vol. 100, 1 March 1984, Columbus, Ohio, US; abstract no. 69227E, 'viscosity control agents' page 33 ;column 2 & JP-A-58 108 283

## Beschreibung

Die vorliegende Erfindung betrifft Gleitmittel enthaltende wässrige Zubereitungen von Mischpolymerisaten, in denen das Gleitmittel gelöst oder dispergiert ist, sowie die Verwendung dieser Zubereitungen als Färberei- und Textilhilfsmittel, insbesondere als Faltenverhinderungsmittel in textilen Nassveredelungsprozessen.

Aus der EP-A-207 003 sind als Faltenfreimittel Polymerisate bekannt, die durch radikalinduzierte Lösungspolymerisation von ethylenisch ungesättigten Carbonsäuren, Sulfonsäuren oder auch Acrylamid in Gegenwart eines diveresterten Polyalkylenglykols hergestellt werden.

Der Erfindung liegt die Aufgabe zugrunde, ein aus einer wässrigen Zubereitung eines Mischpolymerisates und eines darin gelösten oder dispergierten Gleitmittels bestehendes Faltenverhinderungsmittel für Textilmaterialien zur Verfügung zu stellen, welches eine gegenüber dem Stand der Technik verbesserte Reduzierung der Friktion (Reibung Substrat auf Substrat) an textilen Materialien bewirkt und hierdurch die Bildung von Lauffalten und gleichzeitig die damit einhergehenden färberischen Unegalitäten bei Zellstoffen oder Polyesterware während der Jet-Färbung oder bei der Färbung auf der Haspelkufe verhindert.

Die erfindungsgemässen Zubereitungen sind dadurch gekennzeichnet, dass sie durch Polymerisation von
(A) 70 bis 95 Gew.% eines Monomerengemisches aus
   (a) 20 bis 90 Gew.% einer ethylenisch ungesättigten Carbonsäure, insbesondere einer Monocarbonsäure, oder eines entsprechenden Amids,
   (b) 10 bis 80 Gew.% einer sulfonierten, aliphatischen oder aromatischen Monovinylverbindung und
   (c) 0 bis 25 Gew.% N-Vinylpyrrolidon oder eines N-Vinylsubstituierten Amids einer gesättigten aliphatischen Monocarbonsäure in Gegenwart von
(B) 5 bis 30 Gew.% eines Polyols, dessen Hydroxylgruppen mit einer Fettsäure von 8 bis 26 Kohlenstoffatomen verestert sind,
   wobei sich die Summen von (A) und (B) bzw. (a), (b) und (c) jeweils zu 100 % ergänzen, erhältlich sind.

Die neuen Zubereitungen können je nach Aufbau der als Gleitmittel verwendeten diveresterten Polyole als Lösungen, Dispersionen oder Emulsionen vorliegen.

Bevorzugterweise enthalten erfindungsgemässe Zubereitungen Mischpolymerisate, welche aus einem monomeren Gemisch bestehend aus 30 bis 90 Gew.-% des Monomeren (a) und 10 bis 70 Gew.-% des Monomeren (b) erhältlich sind.

Als ethylenisch ungesättigte Carbonsäuren oder deren Säureamide, die im polymerisierbaren Monomerengemisch (A) eingesetzt werden, können aliphatische Mono- oder Dicarbonsäuren oder deren Amide, die jeweils einen ethylenisch ungesättigten aliphatischen Rest und vorzugsweise höchstens 7 Kohlenstoffatome aufweisen, in Betracht kommen.

Bei den Monocarbonsäuren handelt es sich z.B. um die Acrylsäure, Methacrylsäure, α-Halogenacrylsäure, 2-Hydroxyethylacrylsäure, α-Cyanoacrylsäure, Crotonsäure und Vinylessigsäure. Ethylenisch ungesättigte Dicarbonsäuren sind vorzugsweise die Fumarsäure, Maleinsäure oder Itaconsäure sowie auch die Mesaconsäure, Citraconsäure, Glutaconsäure und Methylenmalonsäure. Ethylenisch ungesättigte Carbonsäureamide sind vorzugsweise Acrylamid und Methacrylamid, die z.B. jeweils durch C₁-C₄-Alkylreste, C₂-C₄-Hydroxyalkylgruppen, C₂-C₄-Alkoxyalkylgruppen, Acetyl oder Acetyl-C₁-C₂-alkyl oder durch -CH₂CONH₂ oder 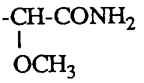 N-substituiert sein können, wie z.B.

N-Methylacrylamid, N,N-Dimethylacrylamid, N-Methoxymethacrylamid, N-β-Hydroxyethylacrylamid, N-Diacetonacrylamid, N-Acetylacrylamid, N-Acryloylamidoessigsäureamid (Acryloylglycin) oder N-Acryloylamidomethoxyessigsäureamid sowie auch N,N-Di-β-hydroxyethylacrylamid. Es können auch Mischungen der Monomeren (a) verwendet werden.

Vorzugsweise handelt es sich um Monocarbonsäuren oder deren Amide jeweils mit 3 bis 5 Kohlenstoffatomen, insbesondere um Methacrylsäure oder Methacrylamid und vor allem um Acrylsäure, Acrylamid oder Mischungen davon.

Zu den erfindungsgemäss mitzuverwendenden sulfonierten Vinylverbindungen (b) gehören insbesondere Vinylsulfonsäure, Allylsulfonsäure, 2-Acrylamido-2-methylpropansulfonsäure, 3-Methacrylamidopropansulfonsäure, 3-Acrylamidopropansulfonsäure, 3-Sulfopropylacrylat, 3-Sulfopropylmethacrylat, Bis-(3-sulfopropylitaconat), 4-Styrolsulfonsäure und 3-Allyloxy-2-hydroxypropylsulfonsäure. Die Monomeren (b) können als freie Säuren oder als Ammonium- oder Alkalimetallsalze, vor allem als Kalium-, Lithium-oder Natriumsalze, verwendet werden.

Als fakultativ mitzuverwendende Vinylverbindungen (c) kommen insbesondere N-Vinylsubstituierte Amide aliphatischer gesättigter Monocarbonsäuren mit 1 bis 4 Kohlenstoffatomen in Betracht, wie z.B. N-Vinylformamid, N-Vinyl-N-methylformamid, N-Vinylacetamid, N-Methyl-N-vinylacetamid, N-Ethyl-N-vinylacetamid. Bevorzugte Monomere (c) sind N-Vinylpyrrolidon und N-Vinyl-N-methylacetamid.

Als Komponente (B) geeignet sind die Diester von Polyalkylenglykolen aus 3 bis 200 Mol, vorzugsweise 3 bis 100 Mol Alkylenoxid, wie z.B. Ethylenoxid, Propylenoxid oder Gemischen von Ethylenoxid und Propylenoxid. Vorzugweise verwendet man Diester dieser Polyalkylenglykole mit langkettigen Fettsäuren von 12 bis 22 Kohlenstoffatomen. Die unveresterten Polyalkylenglykole weisen zweckmässigerweise ein Molekulargewicht von 150 bis 8800, vorteilhafterweise 300 bis 4400 und vorzugsweise 300 bis 1000 auf. Die Veresterung der Alkylenglykole erfolgt durch Umsetzen der Alkylenglykole mit 2 Mol Fettsäure. Man kann auch zuerst Alkylenoxid an die Fettsäure anlagern und dann das Fettsäure-Alkylenoxid-addukt mit derselben Fettsäure oder einer anderen Fettsäure verestern. Die Fettsäuren können gesättigt oder ungesättigt sein, wie z.B. die Capryl-, Caprin-, Laurin-, Myristin-, Palmitin-, Kokosfett-, Stearin-, Talgfett-, Arachin-, Behen-, Lignocerin- oder Cerotinsäure bzw. die Decen-, Dodecen-, Tetradecen-, Hexadecen-, Oel-, Eläostearin-, Linol-, Linolen-, Ricinolein- oder Arachidonsäure. Dabei sind feste Fettsäuren, wie z.B. Talgfettsäure, Palmitin-, Arachin-, Behen- und besonders Stearinsäure bevorzugt.

Als Komponente (B) gut geeignet sind auch 3 bis 6 Kohlenstoffatome aufweisende dreibis sechswertige aliphatische Alkohole, die mit den oben aufgeführten Fettsäuren, insbesondere Stearinsäure oder Behensäure, verestert sind. Die mehrwertigen Alkohole können geradkettig oder verzweigt sein. Als Beispiele seien Glycerin, Trimethylolethan, Trimethylolpropan, Erythrit, Pentaerythrit, Mannit oder Sorbit genannt. Bevorzugte Komponenten (A) auf Basis dieser Polyole sind 1,1,1-Trishydroxymethylpropantristearat und 1.1.1-Trishydroxymethylpropantribehenat.

Erfindungsgemässe Zubereitungen enthalten als Wirksubstanz zweckmässigerweise 75 bis 95 % des polymerisierten Monogemisches (A) und 5 bis 25 Gew.% des definierten veresterten Polyols (B) als Gleitmittel.

Das Monomerengemisch besteht insbesondere aus 35 bis 85 Gew.% der ethylenisch ungesättigten Carbonsäure oder des Amids (a) und 15 bis 65 Gew.% der sulfonierten Vinylverbindung (b). Sowohl die Summe der Komponenten (A) und (B) als auch der Komponenten (a) und (b) beträgt 100 %.

Unter diesen Zubereitungen werden solche bevorzugt, die 5 bis 25 Gew.% des definierten veresterten Polyols, insbesondere eines diveresterten Polyethylenoxidaddukts, 35 bis 75 Gew.% Acrylsäure oder Acrylamid und 20 bis 40 Gew.% der sulfonierten Vinylverbindung, insbesondere 2-Acrylamido-2-methylpropansulfonsäure, wobei die Summe der Komponenten 100 % beträgt, enthalten. Die angegebenen Prozentsätze beziehen sich auf die Trockensubstanz.

Die Herstellung der erfindungsgemässen Zubereitungen erfolgt nach an sich bekannten Methoden, zweckmässig in der Weise, dass man das Monomerengemisch (A) aus (a), (b) und gegebenenfalls (c) zusammen mit dem diveresterten Polyol (B) in Wasser löst oder nötigenfalls unter Mitverwendung eines Hilfsdispergators, wie z.B. Polysorbat 80 dispergiert und in Gegenwart von Radikalinitiatoren zweckmässig bei einer Temperatur von 40 bis 100 °C polymerisiert. Man erhält Mischpolymerisate, in denen das veresterte Polyol (B) gelöst oder dispergiert ist.

Erfindungsgemässe Zubereitungen können auch bereitgestellt werden, indem man die Monomeren (a), (b) und gegebenenfalls (c) zunächst in wässriger Lösung mischpolymerisiert, sodann die veresterten Polyole (B) bei Temperaturen oberhalb ihrer Schmelzpunkte in die Mischpolymerisatlösung hineinlöst bzw. hineinemulgiert.

Als Katalysatoren werden zweckmässigerweise freie Radikale bildende organische oder anorganische Initiatoren verwendet. Geeignete organische Initiatoren zur Durchführung der radikalischen Polymerisation sind z.B. Azoamide, wie z.B. Azo-bis-2-methyl-(1,1-dimethyl-2-hydroxyethyl)propionamid, 2,2'-Azo-bis-(2-methyl-propiohydroxaminsäure), 2,2'-Azo-bis-2-[N-phenylamidino]-propan-dihydrochlorid, 2,2'-Azo-bis-2-methylpropionsäurehydrazid, 2,2'-Azo-bis-N,N-dimethylenisobutylamidin oder besonders 2,2'-Azobis-(2-amidinopropan)-dihydrochlorid. Geeignete anorganische Initiatoren sind Wasserstoffsuperoxid, Perborate, Percarbonate, wie z.B. Natriumpercarbonat, Persulfate, Peroxidisulfate, wie z.B. Kaliumperoxiddisulfat sowie aus der einschlägigen Literatur bekannte Redox-Systeme.

Diese Katalysatoren können in Mengen von 0,05 bis 2 Gewichtsprozent vorteilhafterweise 0,05 bis 1 Gewichtsprozent und vorzugweise 0,1 bis 0,5 Gewichtsprozent, bezogen auf die Ausgangsprodukte, eingesetzt werden.

Die Mischpolymerisation wird vorteilhafterweise in inerter Atmosphäre z.B. in Gegenwart von Stickstoff durchgeführt.

Als Nebenprodukte der Mischpolymerisation aus dem Monomerengemisch (A) in Gegenwart des veresterten Polyols (B) können Pfropfpolymerisate entstehen. Diese zeigen, selbst wenn die Polymerisation unter Bedingungen ausgeführt wird, unter denen diese Nebenprodukte in grösserer Menge auftreten, keine negativen Einflüsse auf das Wirkungsprofil.

Die erfindungsgemässen Zubereitungen fallen als hochviskose, wässrige Lösungen bzw. Dispersionen mit einem Trockengehalt von z.B. 0,5 bis 20 Gew.-%, vorzugsweise 2 bis 10 Gew.-% an. Zur Konservierung und/oder Verbesserung der Lagerstabilität der erhaltenen wässerigen Mischpolymerisatlösungen können Konservierungsmittel, wie z.B. Chloracetamid, N-Hydroxymethylchloracetamid, Pentachlorphenolate, Alkalimetallnitrite, Triethanolamin oder Hydrochinonmonomethylether oder auch antibakterielle Mittel, wie z.B. Natriumazid oder oberflächenaktive quaternäre Ammoniumverbindungen, die einen oder zwei Fettalkylreste aufweisen, zugesetzt werden. Vorteilhafterweise können auch Mischungen dieser Konservierungsmittel und keimtötenden Verbindungen eingesetzt werden.

Die besonders bevorzugten 2-10 Gew.%igen Präparationen zeigen je nach chemischer Zusammensetzung der Mischpolymerisate idealviskoses oder pseudoplastisches Fliessverhalten. Sie haben, je nach Schergeschwindigkeit, bei 20°C eine dynamische Viskosität zwischen 40 und 100'000, vorzugsweise 100 bis 30'000 und insbesondere 100 bis 15'000 mPa·s (milli Pascal Sekunde).

Die erfindungsgemässen Zubereitungen zeigen verbesserte reibungsvermindernde Effekte gegenüber dem Stand der Technik und sind daher besonders geeignet zur Anwendung in textilen Nassveredelungsprozessen.

Sie werden insbesondere als Faltenverhinderungsmittel beim Färben von Cellulosefasern, Polyesterfasern, synthetischen Polyamidfasern oder Mischungen dieser Fasertypen, sowie auch von Wolle oder Polyacrylnitrifasern verwendet, da sie Adhäsionskräften (Friktion) des Textilmaterials stark herabsetzen, wodurch die Bildung von Falten herabgesetzt wird. Sie steigern darüberhinaus die Farbausbeute und haben zudem schaumdämpfende Wirkung.

Erfindungsgemässe Zubereitungen ergeben auch zusammen mit egalisierenden Zusätzen, wie z.B. quaternären Fettaminethoxylaten stabile Färbeflotten. Im Gegensatz zur Verwendung hochmolekularer polyacrylsaurer Salze treten keine Farbstoffausfällungen auf, die zu unerwünschter Schipprigkeit der Färbungen führen.

Gegenstand der vorliegenden Erfindung ist demnach auch ein Verfahren zum Färben bzw. optischen Aufhellen von Cellulosefasern, natürliche oder synthetische Polyamidfasern, Polyacrylnitrilfasern und besonders Baumwolle und/oder Polyesterfasern enthaltenden Textilmaterialien mit den entsprechend geeigneten Farbstoffen bzw. optischen Aufhellern, welches dadurch gekennzeichnet ist, dass man die Textilmaterialien in Gegenwart der erfindungsgemässen Zubereitungen färbt bzw. optisch aufhellt.

Die Einsatzmengen, in denen erfindungsgemässe Zubereitungen den Färbebädern oder Aufhellflotten zugesetzt werden, bewegen sich zweckmässigerweise zwischen 0,01 und 5 Gew.%, vorteilhafterweise 0,05 und 4 und vorzugsweise 0,2 und 3 Gew.-% bezogen auf das Gewicht des Textilmaterials.

Als Cellulosefasermaterial kommt solches aus regenerierter oder insbesondere natürlicher Cellulose in Betracht, wie z.B. Zellwolle, Viskoseseide, Hanf, Leinen, Jute oder vorzugsweise Baumwolle.

Cellulosefasermaterialien werden in der Regel mit substantiven Farbstoffen, Küpenfarbstoffen, Leukoküpenfarbstoffestern oder vor allem Reaktivfarbstoffen gefärbt.

Als Substantivfarbstoffe sind die üblichen Direktfarbstoffe geeignet, beispielsweise die in Colour Index 3rd Edition, (1971) Vol. 2 auf den Seiten 2005-2478 genannten "Direct Dyes".

Bei den Küpenfarbstoffen handelt es sich um höher annelierte und heterocyclische Benzochinone oder Naphthochinone, um Schwefelfarbstoffe und insbesondere um anthrachinoide oder indigoide Farbstoffe. Beispiele von erfindungsgemäss verwendbaren Küpenfarbstoffen sind im Colour Index 3rd Edition (1971) Vol. 3 auf den Seiten 3649 bis 3837 unter der Bezeichnung "Sulphur Dyes" und "Vat Dyes" aufgeführt.

Die Leukoküpenfarbstoffester sind z.B. aus Küpenfarbstoffen der Indigo-, Anthrachinon-oder Indanthren-Reihe durch Reduktion z.B. mit Eisenpulver und anschliessende Veresterung z.B. mit Chlorsulfonsäure erhältlich und sind im Colour Index 3rd Edition, 1971, Vol. 3 als "Solubilised Vat Dyes" bezeichnet.

Unter Reaktivfarbstoffen werden die üblichen Farbstoffe verstanden, welche mit der Cellulose eine chemische Bindung eingehen, z.B. die im Colour Index, im Band 3 (3. Auflage, 1971) auf den Seiten 3391-3560 und in Band 6 (revidierte 3. Auflage, 1975) auf den Seiten 6268-6345 aufgeführten "Reactive Dyes".

Als synthetische Polyamidfasermaterialien, insbesondere Textilmaterialien, die in Gegenwart der neuen Mischpolymerisate gefärbt werden können, sind z.B. solche aus Adipinsäure und Hexamethylendiamin (Polyamid 6,6), aus ε-Caprolactam (Polyamid 6), aus ω-Aminoundecansäure (Polyamid 11), aus ω-Aminoönanthsäure (Polyamid 7), aus ω-Aminopelargonsäure (Polyamid 8) oder aus Sebazinsäure und Hexamethylendiamin (Polyamid 6, 10) zu erwähnen.

Synthetische oder natürliche Polyamidfasermaterialien werden in der Regel mit anionischen Farbstoffen gefärbt.

Bei den anionischen Farbstoffen handelt es sich beispielsweise um Salze schwermetallhaltiger oder vorzugsweise metallfreier Azomethin-, Mono-, Dis- oder Polyazofarbstoffe einschliesslich der Formazanfarbstoffe sowie der Anthrachinon-, Xanthen-, Nitro-, Triphenylmethan-, Naphthochinonimin- und Phthalocyaninfarbstoffe. Der ionische Charakter dieser Farbstoffe kann durch Metallkomplexbildung allein und/oder vorzugsweise durch saure, salzbildende Substituenten, wie Carbonsäuregruppen, Schwefelsäure-und Phosphonsäureestergruppen, Phosphonsäuregruppen oder vorzugsweise Sulfonsäuregruppen bedingt sein. Diese Farbstoffe können im Molekül auch sogenannte reaktive Gruppierungen, welche mit dem zu färbenden Material eine kovalente Bindung eingehen, aufweisen. Bevorzugt sind die sogenannten sauren metallfreien Farbstoffe. Letztere enthalten vorzugsweise nur eine einzige Sulfonsäuregruppe und gegebenenfalls eine weitere, jedoch keine salzbildende, wasserlöslichmachende Gruppe wie die Säureamid- oder Alkylsulfonylgruppe.

Von besonderem Interesse sind auch die 1:1- oder vorzugsweise 1:2-Metallkomplexfarbstoffe . Die 1:1-Metallkomplexfarbstoffe weisen vorzugsweise eine oder zwei Sulfonsäuregruppen auf. Als Metall enthalten sie ein Schwermetallatom, wie z.B. Kupfer, Nickel oder insbesondere Chrom.

Die 1:2-Metallkomplexfarbstoffe enthalten als Zentralatom ein Schwermetallatom, wie z.B. ein Kobaltatom oder insbesondere ein Chromatom. Mit dem Zentralatom sind zwei komplexbildende Komponenten verbunden, von denen mindestens eine ein Farbstoffmolekül ist, vorzugsweise jedoch beide Farbstoffmoleküle sind. Dabei können die beiden an der Komplexbildung beteiligten Farbstoffmoleküle gleich oder voneinander verschieden sein. Die 1:2-Metallkomplexfarbstoffe können z.B. zwei Azomethinmoleküle, einen Disazofarbstoff und einen Monoazofarbstoff oder vorzugsweise zwei Monoazofarbstoffmoleküle enthalten. Die Azofarbstoffmoleküle können wasserlöslichmachende Gruppen aufweisen, wie z.B. Säureamid-, Alkylsulfonyl- oder die obengenannten sauren Gruppen. Bevorzugt sind 1:2-Kobalt- oder 1:2-Chromkomplexe von Monoazofarbstoffen, die Säureamid-, Alkylsulfonyl- oder insgesamt eine einzige Sulfonsäuregruppe aufweisen.

Es können Mischungen der anionischen Farbstoffe eingesetzt werden.

Als Polyesterfasermaterial, das in Gegenwart des Mischpolymerisates gefärbt bzw. optisch aufgehellt werden kann, sind z.B. Celluloseesterfasern, wie Cellulose-2 1/2-acetatfasern und -triacetatfasern und besonders lineare Polyesterfasern zu erwähnen. Unter linearen Polyesterfasern sind dabei Synthesefasern zu verstehen, die z.B. durch Kondensation von Terephthalsäure mit Ethylenglykol oder von Isophthalsäure oder Terephthalsäure mit 1,4-Bis(hydroxymethyl)-cyclohexan erhalten werden, sowie Mischpolymere aus Terephthal- und Isophthalsäure und Ethylenglykol. Der in der Textilindustrie bisher fast ausschliesslich eingesetzte lineare Polyester besteht aus Terephthalsäure und Ethylenglykol.

Die für das Färben von Polyesterfasermaterialien zu verwendenden Dispersionsfarbstoffe, die in Wasser nur sehr wenig löslich sind und in der Farbflotte zum grössten Teil in Form einer feinen Dispersion vorliegen, können den verschiedensten Farbstoffklassen angehören, beispielsweise den Acridon-, Azo-, Anthrachinon-, Cumarin-, Methin-, Perinon-, Napthochinonimin -, Chinophthalon-, Stryryl- oder Nitrofarbstoffen. Es können auch Mischungen von Dispersionsfarbstoffen eingesetzt werden.

Polyacrylnitrifasern werden zweckmässigerweise mit kationischen Farbstoffen gefärbt. Als kationische Farbstoffe können sowohl migrierende als auch nicht-migrierende Farbstoffe eingesetzt werden.

Als migrierende kationische Farbstoffe sind insbesondere solche mit einer mehr oder weniger delokalisierten positiven Ladung geeignet, deren Kationgewicht kleiner als 310, deren Parachor kleiner als 750 und deren log P kleiner als 3,2 ist. Der Parachor wird gemäss dem Artikel von O.R. Quayle [Chem. Rev. 53, 439 (1953)] berechnet und log P bedeutet die relative Lipophilie, deren Berechnung von C. Hanach et al [J. Med. Chem. 16, 1207 (1973)] beschrieben wurde.

Nicht-migrierende kationische Farbstoffe sind insbesondere diejenigen, deren Kationgewicht grösser als 310 und deren Parachor grösser als 750 ist.

Die kationischen, migrierenden und nichtmigrierenden Farbstoffe können verschiedenen Farbstofklassen angehören. Insbesondere handelt es sich um Salze, beispielsweise Chloride, Sulfate oder Metallhalogenide, beispielsweise Zinkchloriddoppelsalze von Azofarbstoffen wie Monoazofarbstoffen oder Hydrazonfarbstoffen, Anthrachinon-, Diphenylmethan-, Triphenylmethan-, Methin-, Azomethin-, Cumarin-, Ketonimin-, Cyanin-, Xanthen-, Azin-, Oxazin- oder Thiazinfarbstoffen.

Es können Mischungen der kationischen Farbstoffe eingesetzt werden. Besonders bevorzugt sind Farbstoffkombinationen von mindestens 2 oder vorzugsweise 3 migrierenden oder nicht-migrierenden kationischen Farbstoffen zur Herstellung egaler Dichromie- oder Trichromiefärbungen, wobei auch Gemische aus migrierenden und nichtmigrierenden kationischen Farbstoffen verwendet werden können.

Die Fasermaterialien können auch als Mischgewebe unter sich oder mit anderen Fasern, z.B. Mischungen aus Polyacrylnitril/Polyester, Polyamid/Polyester, Polyester/Baumwolle, Polyester/Viskose, Polyacrylnitril/Wolle und Polyester/Wolle, verwendet werden.

Fasermischungen aus Polyester und Baumwolle werden in der Regel mit Kombinationen von Dispersionsfarbstoffen und Küpenfarbstoffen, Schwefelfarbstoffen, Leukoküpenesterfarbstoffen, Direktfarbstoffen oder Reaktivfarbstoffen gefärbt, wobei der Polyesteranteil mit Dispersionsfarbstoffen vor-, gleichzeitig oder nachgefärbt wird.

Polyester/Wolle-Mischfasermaterialien werden erfindungsgemäss vorzugsweise mit handelsüblichen Mischungen von anionischen Farbstoffen und Dispersionsfarbstoffen gefärbt.

Das zu färbende Textilmaterial kann sich in verschiedenen Aufmachungsformen befinden. Vorzugsweise kommt Stückware, wie Gewirke oder Gewebe, in Betracht

Erfindungsgemässe Zubereitungen können auch beim Weisstönen ungefärbter synthetischer Fasermaterialien mit in Wasser dispergierten optischen Aufhellem eingesetzt werden. Die optischen Aufheller können beliebigen Aufhellerklassen angehören. Insbesondere handelt es sich um Cumarine, Triazolcumarine, Benzocumarine, Oxazine, Pyrazine, Pyrazoline, Diphenylpyrazoline, Stilbene, Styrylstilbene, Triazolylstilbene, Bisbenzoxazolylethylene, Stilben-bis-Benzoxazole, Phenylstilbenbenzoxazole, Thiophenbis-Benzoxazole, Naphthalin-bis-Benzoxazole, Benzofurane, Benzimidazole und Naphthalimide.

Es können auch Mischungen von optischen Aufhellern verwendet werden.

Die Menge der der Flotte zuzusetzenden Farbstoffe oder optischen Aufheller richtet sich nach der gewünschten Farbstärke; im allgemeinen haben sich Mengen von 0,01 bis 10, vorzugsweise 0,2 bis 5 Gew.-%, bezogen auf das eingesetzte Textilmaterial, bewährt.

Die Färbebäder oder Aufhellerflotten können je nach dem zu behandelnden Textilmaterial neben den Farbstoffen bzw. optischen Aufhellern und den erfindungsgemässen Zubereitungen von Mischpolymerisaten Wollschutzmittel, Oligomereninhibitoren, Oxidationsmittel, Antischaummittel, Emulgatoren, Egalisiermittel, Retarder und vorzugsweise Dispergiermittel enthalten.

Die Dispergiermittel dienen vor allem zur Erzielung einer guten Feinverteilung der Dispersionsfarbstoffe. Es kommen die beim Färben mit Dispersionsfarbstoffen allgemein gebräuchlichen Dispergatoren in Frage.

Als Dispergiermittel kommen vorzugsweise sulfatierte oder phosphatierte Anlagerungsprodukte von 15 bis 100 Mol Ethylenoxid oder vorzugsweise Propylenoxid an mehrwertige, 2 bis 6 Kohlenstoffatome aufweisende aliphatische Alkohole, wie z.B. Ethylenglykol, Glycerin oder Pentaerythrit oder an mindestens zwei Aminogruppen oder eine Aminogruppe und eine Hydroxylgruppe aufweisende Amine mit 2 bis 9 Kohlenstoffatomen sowie Alkylsulfonate mit 10 bis 20 Kohlenstoffatomen in der Alkylkette, Alkylbenzolsulfonate mit geradkettiger oder verzweigter Alkylkette mit 8 bis 20 Kohlenstoffatomen in der Alkylkette, wie z.B. Nonyl- oder Dodecylbenzolsulfonat, 1,3,5,7-Tetramethyloctylbenzolsulfonat oder Sulfobemsteinsäureester, wie Natriumdioctylsulfosuccinat, in Betracht.

Besonders günstig haben sich als anionische Dispergiermittel Ligninsulfonate, Polyphosphate und vorzugsweise Formaldehyd-Kondensationsprodukte aus aromatischen Sulfonsäuren, Formaldehyd und gegebenenfalls mono- oder bifunktionellen Phenolen, wie z.B. aus Kresol, β-Naphtholsulfonsäure und Formaldehyd, aus Benzolsulfonsäure, Formaldehyd und Naphthalinsulfonsäure, aus Naphthalinsulfonsäure und Formaldehyd oder aus Naphthalinsulfonsäure, Dihydroxydiphenylsulfon und Formaldehyd erwiesen. Bevorzugt ist das Dinatriumsalz des Di-(6-sulfonaphthyl-2-)methans.

Es können auch Gemische von anionischen Dispergiermitteln zum Einsatz kommen. Normalerweise liegen die anionischen Dispergiermittel in Form ihrer Alkalimetallsalze, Ammoniumsalze oder Aminosalze vor. Diese Dispergiermittel werden vorzugsweise in einer Menge von 0,1 bis 5 g/l Flotte verwendet.

Die Färbebäder oder Aufhellerflotten können je nach dem zu verwendenden Farbstoff und Substrat zusätzlich zu den bereits genannten Hilfsmitteln auch übliche Zusätze, zweckmässig Elektrolyte wie Salze, z.B. Natriumsulfat, Ammoniumsulfat, Natrium- oder Ammoniumphosphate oder -polyphosphate, Metallchloride oder -nitrate wie Natriumchlorid, Calciumchlorid, Magnesiumchlorid bzw. Calciumnitrat, Ammoniumacetat oder Natriumacetat und/oder Säuren, z.B. Mineralsäuren wie Schwefelsäure oder Phosphorsäure, oder organische Säuren, zweckmässig niedere aliphatische Carbonsäuren wie Ameisen-, Essig- oder Oxalsäure sowie auch Alkalien oder Alkalispender und/oder Komplexbildner, enthalten.

Die Säuren dienen vor allem der Einstellung des pH-Wertes der erfindungsgemäss verwendeten Flotten, der in der Regel 3 bis 6,5, vorzugsweise 4,5 bis 6, beträgt.

Bei Verwendung von Reaktivfarbstoffen enthalten die Zubereitungen in der Regel Fixieralkalien.

Als alkalisch reagierende Verbindung zur Fixierung der Reakitivfarbstoffe werden beispielsweise Natriumcarbonat, Natriumbicarbonat, Natriumhydroxid, Dinatriumphosphat, Trinatriumphosphat, Borax, wässeriges Ammoniak oder Alkalispender wie z.B Natriumtrichloracetat, eingesetzt. Als Alkali hat sich insbesondere eine Mischung aus Wasserglas und einer 30 %-igen wässerigen Natriumhydroxidlösung sehr gut bewährt.

Der pH-Wert der Alkali enthaltenden Färbeflotten beträgt in der Regel 7,5 bis 12,5 vorzugsweise 8,5 bis 11,5.

Die Färbungen bzw. Aufhellungen erfolgen mit Vorteil aus wässeriger Flotte nach dem Ausziehverfahren. Das Flottenverhältnis kann dementsprechend innerhalb eines weiten Bereiches gewählt werden, z.B. 1:4 bis 1:100, vorzugsweise 1:6 bis 1:50. Die Temperatur, bei der gefärbt bzw. aufgehellt wird, beträgt mindestens 70°C und ist in der Regel nicht höher als 140°C. Vorzugsweise liegt sie im Bereich von 80 bis 135°C.

Lineare Polyesterfasern und Cellulosetriacetatfasern färbt man vorzugsweise nach dem sogenannten Hochtemperaturverfahren in geschlossenen und zweckmässigerweise auch druckbeständigen Apparaturen bei Temperaturen von über 100°C, bevorzugt zwischen 110 und 135°C, und gegebenenfalls unter Druck. Als geschlossene Gefässe eignen sich beispielsweise Zirkulationsapparaturen wie Kreuzspul- oder Baumfärbeapparate, Haspelkufen, Düsen- oder Trommelfärbemaschinen, Muff-Färbeapparate, Paddeln oder Jigger.

Cellulose-2 1/2-acetatfasern färbt man vorzugsweise bei Temperaturen von 80-85°C.

Wenn das zu färbende Material Cellulosefasermaterial oder synthetisches Polyamidfasermaterial allein ist, erfolgt die Färbung zweckmässig bei einer Temperatur von 20 bis 106°C, vorzugsweise von 30 bis 95°C für Cellulosefasern und 80 bis 95°C für Polyamidfasern.

Die Färbung der Polyester-Baumwollfasermaterialien erfolgt vorzugsweise bei Temperaturen von über 106°C, zweckmässig bei 110 bis 135°C. Diese Mischfasermaterialien können in Gegenwart von Carrier oder Carriergemischen gefärbt werden, welche als Färbebeschleuniger für das Färben des Polyesteranteils mit Dispersionsfarbstoffen wirken.

Das Färbeverfahren kann so durchgeführt werden, dass man das Färbegut entweder zuerst mit der erfindungsgemässen Zubereitung kurz behandelt und anschliessend färbt oder vorzugsweise gleichzeitig mit der Zubereitung und dem Farbstoff behandelt.

Die Fertigstellung der Färbungen erfolgt durch Abkühlen der Färbeflotte auf 40 bis 70°C, Spülen der Färbungen mit Wasser und gegebenenfalls durch Reinigung auf übliche Weise in alkalischem Medium unter reduktiven Bedingungen. Die Färbungen werden dann wiederum gespült und getrocknet Bei einer allfälligen Verwendung von Carriern werden die Färbungen zwecks Verbesserung der Lichtechtheit, vorteilhafterweise noch einer Hitzebehandlung, z.B. Thermosolieren, unterworfen, die vorzugsweise bei 160 bis 180°C und während 30 bis 90 Sekunden durchgeführt wird. Bei Verwendung von Küpenfarbstoffen für den Celluloseanteil wird die Ware auf übliche Weise zuerst mit Hydrosulfit bei einem pH-Wert von 6 bis 12,5 und dann mit Oxydationsmittel behandelt und schliesslich ausgewaschen.

Man erhält nach dem erfindungsgemässen Färbeverfahren gleichmässige und farbkräftige Ausfärbungen, die sich durch gute Farbausbeuten auszeichnen. Insbesondere werden egale Färbungen erzielt, wobei das Material faltenfrei (Monsantobild 2-4; Friktionswert 35 bis 70 %) ist, ein ruhiges Warenbild zeigt und einen angenehmen, weichen Griff besitzt.

Zudem werden die Echtheiten der Färbungen, wie z.B. Lichtechtheit, Reibechtheit und Nassechtheiten durch den Einsatz des Hilfsmittelgemisches nicht negativ beeinflusst. Ferner tritt beim Färben des Textilmaterials in Gegenwart der erfindungsgemässen Zubereitungen kein störendes Schäumen auf.

In den folgenden Herstellungs- und Anwendungsbeispielen beziehen sich die Prozentsätze, wenn nichts anderes angegeben ist, auf das Gewicht. Die Mengen beziehen sich bei den Farbstoffen auf handelsübliche, d.h. coupierte Ware und bei den Komponenten des Hilfsmittelgemisches auf Reinsubstanz. Allfällige fünfstellige Colour-Index-Nummern (C.I.) beziehen sich auf die 3. Auflage des Colour-Index.

### Herstellungsbeispiele

Beispiel 1: Eine Lösung von 165 g 2-Acrylamido-2-methylpropansulfonsäure in 5500 g Wasser wird mit 106 g einer 30 %igen Natriumhydroxidlösung neutralisiert und mit 1700 g einer 30 % wässrigen Acrylamidlösung kombiniert. 124,5 g Polyethylenglykol-400-distearat und 10 g Polysorbat werden unter Stickstoffatmosphäre auf 60°C geheizt. Hierauf lässt man im Verlaufe von 4 Stunden gleichzeitig die kombinierte Monomer-lösung und eine Lösung von 5 g Kaliumpersulfat in 655 g Wasser zutropfen. Nach Beendigung des Zutropfens lässt man 2 Stunden bei 60°C nachpolymerisieren. Alsdann wird das Polymerisationsprodukt unter Rühren abgekühlt. Man fügt 10,9 g Chloracetamid hinzu und rührt weiter während 3 Stunden. Man erhält 8320 g einer viskosen, gut giessbaren Dispersion, mit einem Wirksubstanz-Trockengehalt von 10 Gewichtsprozent.

Dynamische Viskosität einer 5 %igen Lösung in mPa·s bei 25°C als Funktion der Mess-Schergeschwindigkeit vₛ.

Schergeschwindigkeit vₛ (sec⁻¹)
0,04 0,5 5,5

Dynamische Viskosität η (mPa·s)
110 102 99

Bezogen auf Wasser, dessen Friktionswert gleich 100 % gesetzt wird, beträgt der Friktionswert dieser Präparation auf Baumwolle 61 % und auf Polyester/Baumwoll-Mischungen (67:33) 62 %. Die Friktionswerte werden mit dem Low Shear Rheometer bestimmt.

Beispiel 2: Eine Lösung von 7,55 g 2-Acrylamido-2-methylpropansulfonsäure und 10,5 g Acrylsäure in 50 g Wasser wird mit 23,3 g einer 30 %igen wässrigen Natriumhydroxidlösung neutralisiert und auf einen pH-Wert von 6 gestellt. Man fügt der Lösung 12,9 g Acrylamid in fester Form hinzu und rührt, bis alles gelöst ist. Die Lösung wird zu 5,7 g Polyethylenglykol-400-distearat und 0,5 g Polysorbat 80 zugegeben. Die Mischung wird unter Stickstoffatmosphäre auf 70°C aufgeheizt. Hierauf lässt man langsam eine Lösung von 0,33 g Natriumpersulfat in 10 g Wasser zutropfen. Zur Erhaltung der Rührbarkeit lässt man gleichzeitig kontinuierlich auch 90 ml Wasser zutropfen. Nach Beendigung des Zutropfens lässt man unter Rühren 2 Stunden auspolymerisieren. Man verdünnt nach dem Erkalten mit 203 g Wasser und rührt weiter zur Homogenisierung. Man erhält 413,7 g einer viskosen, gut giessbaren Dispersion mit einem Wirksubstanz-Trockengehalt von 10 %. Das Produkt zeigt pseudoplastisches Verhalten.

Dynamische Viskosität einer 5 %igen Lösung in mPa·s bei 25°C als Funktion der Mess-Schergeschwindigkeit vₛ.

Schergeschwindigkeit vₛ (sec⁻¹)
0,04 0,5 5,5

Dynamische Viskosität η (mPa·s)
7021 5755 3500

Der Friktionswert beträgt 43 % auf Baumwolle, 38 % auf Polyester/Baumwolle.

Auf gleiche Art und Weise wie in den Beispielen 1 und 2 beschrieben werden folgende erfindungsgemässe Zubereitungen von Mischpolymerisaten in Form von 10 %igen wässerigen Lösungen hergestellt. Die angegebenen Prozentsätze beziehen sich auf die verwendeten Ausgangsprodukte.

### Beispiel 3

Zubereitung erhältlich aus
- 14,1 %: 1.1.1.Trishydroxymethylpropantristearat
- 22 %: Acrylamid
- 63,9 %: 2-Acrylamido-2-methylpropansulfonsäure

Schergeschwindigkeit vₛ (sec⁻¹)
0,04 0,5 5,5

Dynamische Viskosität η (mPa·s) :
723 695 559

Friktionswert 45 % auf Baumwolle, 32 % auf Polyester/Baumwolle.

### Beispiel 4

- 14,1%: 1.1.1-Trishydroxymethylpropantribehenat
- 22,2 %: Acrylsäure
- 63,7 %: 2-Acrylamido-2-methylpropansulfonsäure

Schergeschwindigkeit vₛ (sec⁻¹)
0,04 0,5 5,5

Dynamische Viskosität η (mPa·s):
144 144 144

Friktionswert 45 % auf Baumwolle, 50 % auf Polyester/Baumwolle.

### Beipsiel 5

- 18,9 %: 18,9 % 1.1.1-Trishydroxymethylpropantristearat
- 46,9 %: Acrylamid
- 34,2 %: 2-Acrylamido-2-methylpropansulfonsäure

Schergeschwindigkeit vₛ (sec⁻¹)
0,04 0,5 5,5

Dynamische Viskosität η (mPa·s):
4740 2242 1500

Friktionswert 35 % auf Baumwolle, 33 % auf Polyester/Baumwolle.

### Beispiel 6

- 16 %: 1.1.1-Trishydroxymethylpropantristearat
- 28,5 %: Acrylamid
- 55,5 %: 2-Acrylamido-2-methylpropansulfonsäure

Schergeschwindigkeit vₛ(sec⁻¹)
0,04 0,5 5,5

Dynamische Viskosität η (mPa·s):
1029 996 700

Friktionswert 37 % auf Baumwolle, 28 % auf Polyester/Baumwolle.

### Beispiel 7

- 17,6 %: Polyethylenglykol-400-distearat
- 58,6 %: Acrylsäure
- 23,8 %: Natrium-4-styrolsulfonat

Schergeschwindigkeit vₛ (sec⁻¹)
0,04 0,5 5,5

Dynamische Viskosität η (mPa·s):
1500 1169 612

Friktionswert 51 % auf Baumwolle, 47 % auf Polyester/Baumwolle.

### Beispiel 8

- 25,2 %: Polyethylenglykol-400-distearat
- 40,4 %: Acrylsäure
- 34,4 %: 3-Sulfopropylmethacrylat

Schergeschwindigkeit vₛ (sec⁻¹)
0,04 0,5 5,5

Dynamische Viskosität η (mPa·s):
1500 1169 612

Friktionswert 64 % auf Baumwolle, 54 % auf Polyester/Baumwolle.

### Beispiel 9

- 25 %: Polyethylenglykol-400-distearat
- 41,5 %: Acrylsäure
- 33,5 %: 3-Sulfopropylacrylat

Schergeschwindigkeit vₛ (sec⁻¹):
0,04 0,5 5,5

Dynamische Viskosität η (mPa·s):
207 202 202

Friktionswert 55 % auf Baumwolle, 55 % auf Polyester/Baumwolle.

### Beispiel 10

- 11,5 %: Polyethylenglykol-400-distearat
- 34,5 %: Acrylsäure
- 54 %: Natriumvinylsulfonat

Schergeschwindigkeit vₛ (sec⁻¹):
0,04 0,5 5,5

Dynamische Viskosität η (mPa·s):
195 104 42

Friktionswert 53 % auf Baumwolle, 45 % auf Polyester/Baumwolle.

### Beispiel 11

- 25 %: Polyethylenglykol-400-distearat
- 43,6 %: Acrylsäure
- 31,4 %: 2-Acrylamido-2-methylpropansulfonsäure

Schergeschwindigkeit vₛ (sec⁻¹):
0,04 0,5 5,5

Dynamische Viskosität η (mPa·s) :
280 257 212

Friktionswert 62 % auf Baumwolle, 51 % auf Polyester/Baumwolle.

### Beispiel 12

- 25 %: Polyethylenglykol-400-distearat
- 56,8 %: Acrylsäure
- 18,2%: 2-Acrylamido-2-methylpropansulfonsäure

Schergeschwindigkeit vₛ (sec⁻¹):
0,04 0,5 5,5

Dynamische Viskosität η (mPa·s):
300 283 237

Friktionswert 61 % auf Baumwolle, 45 % auf Polyester/Baumwolle.

### Beispiel 13

- 14,8 %: Polyethylenglykol-400-distearat
- 44,7 %: Acrylsäure
- 44,5 %: Natrium-4-styrolsulfonat

Schergeschwindigkeit vₛ (sec⁻¹):
0,04 0,5 5,5

Dynamische Viskosität η (mPa·s):
194 176 155

Friktionswert 60 % auf Baumwolle, 54 % auf Polyester/Baumwolle.

### Beispiel 14

- 25 %: Polyethylenglykol-400-distearat
- 56,4 %: Acrylsäure
- 18,6 %: Di-Kalium-bis-(3-sulfopropyl)-itaconat

Schergeschwindigkeit vₛ (sec⁻¹):
0,04 0,5 5,5

Dynamische Viskosität η (mPa·s):
811 742 602

Friktionswert 53 % auf Baumwolle, 46 % auf Polyester/Baumwolle.

### Beispiel 15

- 14,5 %: Polyethylenglykol-400-distearat
- 45,9 %: Acrylamid
- 19,1%: 2-Acrylamido-2-methylpropansulfonsäure
- 20,5 %: N-Vinylpyrrolidon

Schergeschwindigkeit vₛ (sec⁻¹):
0,04 0,5 5,5

Dynamische Viskosität η (mPa·s):
263 263 263

Friktionswert 60 % auf Baumwolle, 61 % auf Polyester/Baumwolle.

### Beispiel 16

- 14,2 %: Polyethylenglykol-400-distearat
- 22,1 %: Acrylamid
- 63,7 %: Natrium-4-styrolsulfonat

Schergeschwindigkeit vₛ (sec⁻¹):
0,04 0,5 5,5

Dynamische Viskosität η (mPa·s):
61 61 61

Friktionswert 62 % auf Baumwolle, 67 % auf Polyester/Baumwolle.

### Beispiel 17

- 14,8 %: Polyethylenglykol-400-distearat
- 47 %: Acrylamid
- 19,5 %: 2-Acrylamido-2-methylpropansulfonsäure
- 18,7 %: N-Vinyl-N-methylacetamid

Schergeschwindigkeit vₛ (sec⁻¹):
0,04 0,5 5,5

Dynamische Viskosität η (mPa·s):
61 61 61

Friktionswert 54 % auf Baumwolle, 56 % auf Polyester/Baumwolle.

### Anwendungsbeispiele

### Beispiel 1

100 g eines gebleichten Baumwoll Cretonne Gewebes werden in 2 Liter Wasser auf einer Laborjetfärbemaschine mit folgenden Zusätzen gefärbt:
0,25 g eines Farbstoffes der Formel 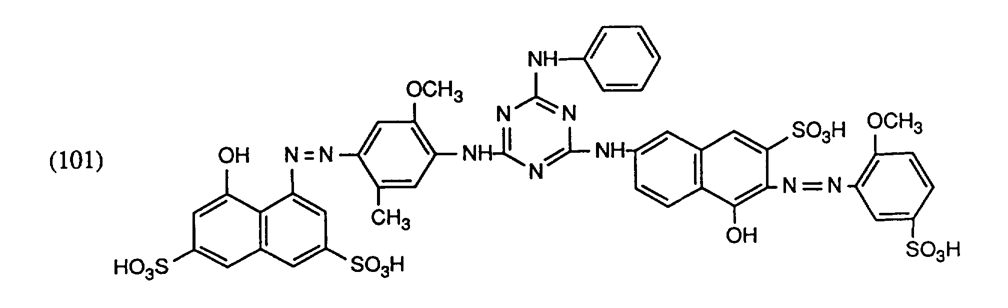
0,3 g eines Farbstoffes der Formel 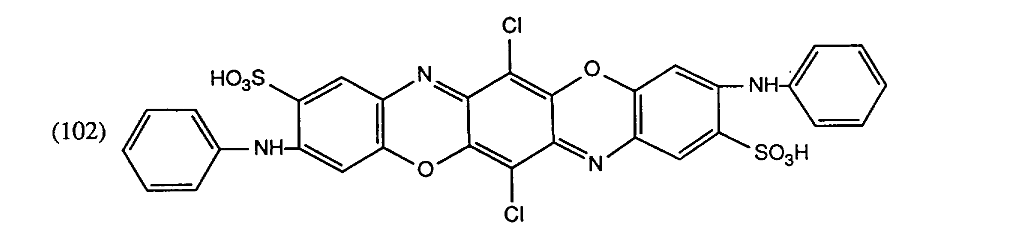 2 g der gemäss Beispiel 1 hergestellten das Mischpolymerisat enthaltenden Zubereitung

Diese Zusätze werden zuerst in Wasser gelöst bzw. dispergiert und dem Färbebad bei 50°C zugegeben. Danach wird die Färbeflotte bei ständiger Zirkulation und Bewegung des Substrates im Verlauf von 30 Minuten auf 98°C aufgeheizt. Nach 15 Minuten werden 20 g Glaubersalz der Färbeflotte zugegeben. Hiernach wird das Gewebe weitere 30 Minuten bei 98°C gefärbt, worauf das Färbebad auf 60°C abgekühlt und das Gewebe warm und kalt gespült und getrocknet wird. Man erhält eine faltenfreie egale und graue Färbung. Der Einsatz der erfindungsgemässen Zubereitung erbringt eine deutliche Herabsetzung des Friktionswertes auf 59 %. Ohne den Zusatz dieser Zubereitung ist die Friktion (Reibung Substrat auf Substrat) 100 %. Die das Mischpolymerisat enthaltende Zubereitung wirkt nicht retardierend und verändert auch nicht die Nuance.

### Beispiel 2

100 g eines Polyesterstapelgewebes werden auf einer Haspelkupe bei 30°C mit einer Färbeflotte behandelt, die
0,25 g eines Farbstoffes der Formel 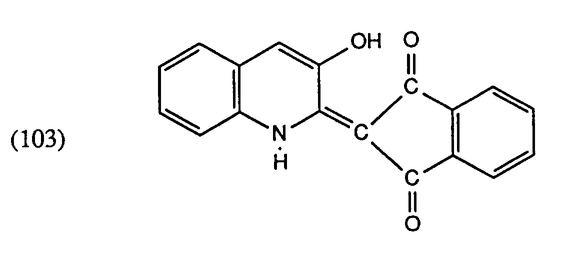
0,35 g eines Farbstoffes der Formel 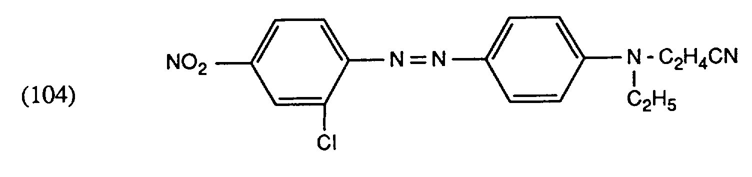
0,15 g eines Farbstoffes der Formel 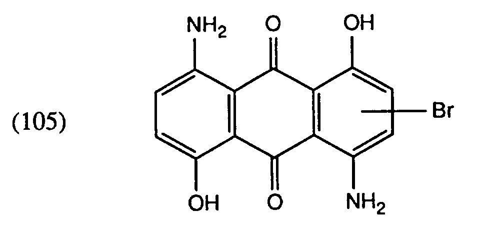
2 g der gemäss Beispiel 2 hergestellten Zubereitung
2 g Ammoniumsulfat
enthält und mit Ameisensäure auf pH 5,5 gestellt ist. Nach einer Vorlaufzeit von 10 Minuten bei 30°C wird die Temperatur auf 130°C erhöht, worauf das Gewebe bei dieser Temperatur weitere 60 Minuten gefärbt wird. Alsdann kühlt man die Flotte auf 60°C ab, spült und trocknet das Gewebe. Man erhält eine faltenfreie, egale braune Färbung. Der Friktionswert beträgt unter Einsatz der Zubereitung 63 %.

### Beispiel 3

100 g eines Polyamid-6,6-Stapelgewebes werden auf einem Labor-Jet-Färbeapparat bei 40°C in 2 Liter Wasser mit folgenden Zusätzen behandelt:
40°C in 2 Liter Wasser mit folgenden Zusätzen behandelt:
4 g der gemäss Beispiel 1 hergestellten Zubereitung
2 g eines Kondensationsproduktes aus 1 Mol Fettamin und 70 Mol Ethylenoxid

Die Flotte wird mit Essigsäure auf den pH-Wert 5,5 gestellt. Nach einer Vorlaufzeit von 15 Minuten bei 40°C wird
1 g eines Farbstoffes der Formel 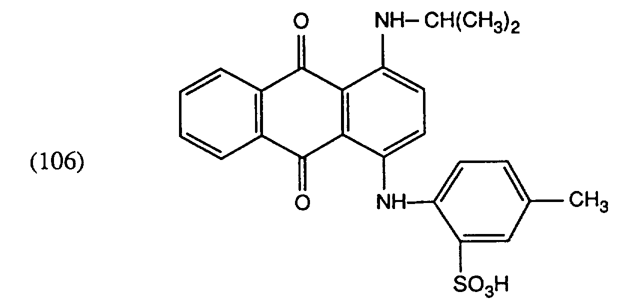 der Flotte zudosiert, worauf man die Flotte weitere 5 Minuten zirkulieren lässt. Danach erwärmt man die Flotte im Verlaufe von 30 Minuten auf 98°C und färbt 30 Minuten bei dieser Temperatur.

Anschliessend kühlt man die Flotte im Verlauf von 15 Minuten auf 60°C ab und spült und trocknet das Gewebe. Man erhält eine faltenfreie, egale blaue Färbung. Der Friktionswert beträgt 68 %. Eine Nuancenänderung tritt nicht ein.

### Beispiel 4

100 g eines texturierten Polyestergewirkes werden 2,4 Liter Wasser auf einer Laborjetfärbemaschine mit folgenden Zusätzen gefärbt:
2 g eines Farbstoffes der Formel 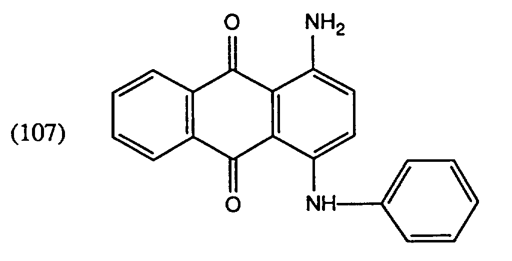
5 g Ammoniumsulfat,
1 g Ammoniumsalz des sauren Schwefelsäureesters eines durch Anlagerung von Propylenoxid an Glycerin erhaltenen Polyadduktes vom durchschnittlichem Molekulargewicht von 3200,
3 g der gemäss Beispiel 1 hergestellten Zubereitung
und 0,2 g Ameisensäure 85 %.

Diese Zusätze werden zuerst in Wasser gelöst bzw. dispergiert und dem Färbebad bei 70°C zugegeben. Danach wird die Färbetemperatur innerhalb 60 Minuten auf 127°C erhöht, worauf die Ware weitere 60 Minuten bei dieser Temperatur gefärbt wird. Alsdann kühlt man die Flotte im Verlaufe von 10 Minuten auf 60°C ab, wonach die Färbung gespült und getrocknet wird. Man erhält eine egale blaue Färbung.

Der Friktionswert beträgt 62 %.

### Beispiel 5

100 g eines Mischgewebes aus 55 Teilen Polyester und 45 Teilen Wolle werden auf einer Haspelkufe bei 50°C mit einer Färbeflotte behandelt, die
1 kg eines Farbstoffes (7:3) aus den Farbstoffen der Formel 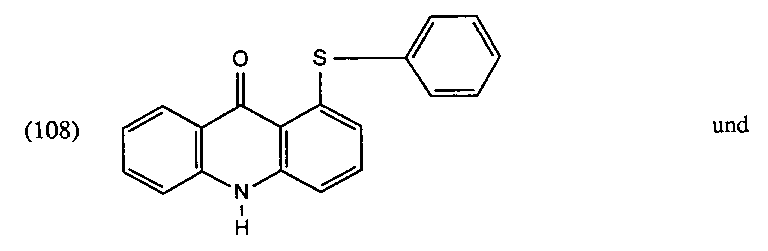 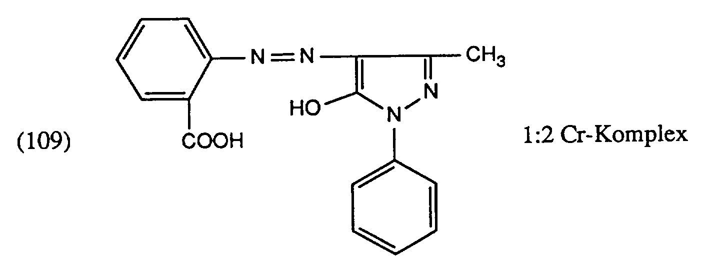
0,8 kg Ammoniumsulfat,
4 kg Naphthalinsulfonsäure/Formaldehyd-Umsetzungsprodukt,
2 kg eines amphoteren Fettaminopolyglykolethersulfates und
3 kg der gemäss Beispiel 2 hergestellten Zubereitung
in 4000 Liter Wasser enthält. Alsdann steigert man die Temperatur im Verlaufe von 30 Minuten auf 107°C, worauf das Gewebe 1 Stunde bei dieser Temperatur gefärbt wird. Anschliessend kühlt man das Bad auf 40°C ab und spült und trocknet das gefärbte Gewebe. Das Färbebad ist während der ganzen Dauer des Färbevorgangs schaumfrei.

Man erhält eine gleichmässige, echte, gelbe Färbung.

Der Friktionswert beträgt 58 %.

### Beispiel 6

Zu einer Hochtemperaturfärbemäschine, welche 100 kg eines Gewebes aus Polyester/Baumwolle (67:33) in 3000 Liter Wasser bei 60°C enthält, werden zuerst folgende Zusätze gegeben:
2 kg eines Gemisches aus den Farbstoffen der Formeln 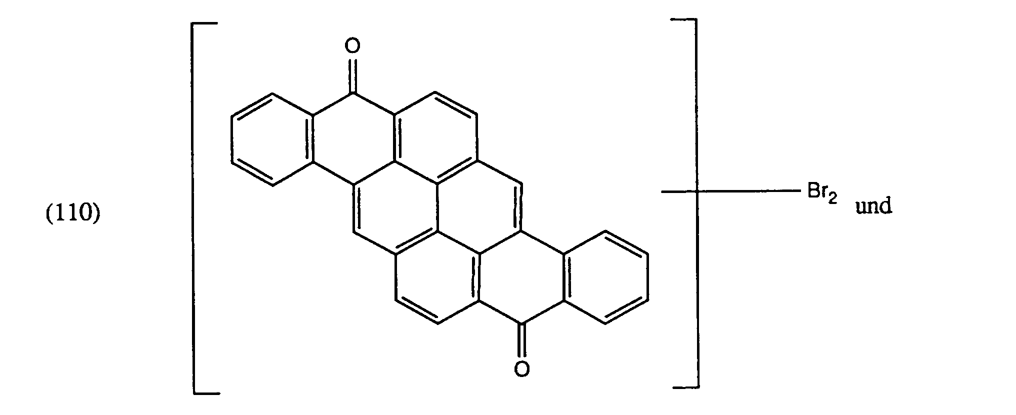 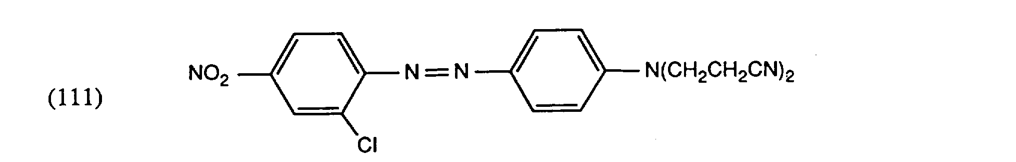
6 kg Ammoniumsulfat und
0,6 kg eines Fettalkylbenzimidazolsulfonates.

Dann erfolgt der Zusatz von 4 kg der gemäss Beispiel 1 hergestellten Zubereitung. Hierauf stellt man den pH-Wert der Flotte mit 85 %-iger Ameisensäure auf 5 und lässt die Ware während 15 Minuten zirkulieren. Alsdann erhöht man die Temperatur im Verlaufe von 50 Minuten auf 135°C und behandelt die Ware 90 Minuten bei dieser Temperatur. Die Flotte wird danach auf 70°C abgekühlt, worauf folgende Zusätze zur Entwicklung des Küpenfarbstoffes hinzugefügt werden:
9 kg Natriumhydroxidlösung 30 %
9 kg Hydrosulfit 40 % und
5 kg Natriumchlorid.

Hiernach wird das Färbegut nochmals 45 Minuten bei 60°C behandelt. Anschliessend wird es gespült, mit Wasserstoffsuperoxid oxidiert, wieder gespült und getrocknet. Das Färbebad ist während der ganzen Dauer des Färbevorgangs schaumfrei.

Der Friktionswert beträgt 61 %.

### Beispiel 7

100 g Wollserge (180 g/m) werden in 2,4 Liter Wasser auf einer Laborjetfärbmaschine mit folgenden Zusätzen gefärbt:
A
   2g 80 %ige Essigsäure
   5 g Natriumsulfat (wasserfrei)
   3 g der gemäss Beispiel 2 hergestellten Zubereitung
B
   0,5 g eines Farbstoffes der Formel

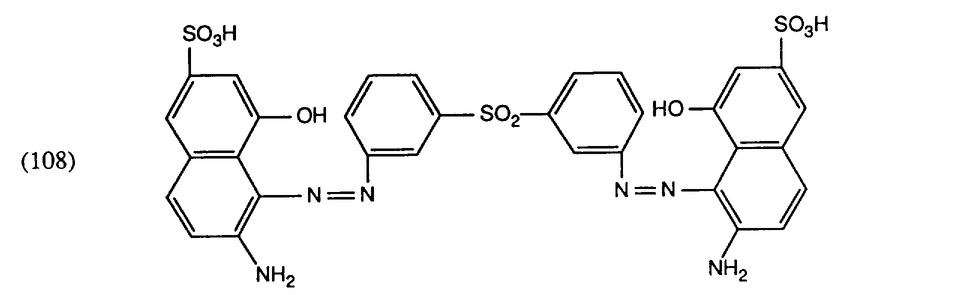

Die Zusätze A werden zuerst in Wasser gelöst bzw. dispergiert und dem Färbebad bei 50°C zugegeben. Nach 5 Minuten wird der Farbstoff (Zusatz B) hinzugefügt, worauf die Temperatur innerhalb 30 Minuten auf 98° erhöht und die Ware 60 Minuten bei dieser Temperatur gefärbt wird. Alsdann kühlt man die Flotte auf 50°C ab, wonach die Färbung gespült und getrocknet wird. Man erhält eine echte, gleichmässig rote Färbung mit sehr geringer Faltenbildung.

### Beispiel 8

10 g gebleichtes und mercerisiertes Baumwolltrikot werden in einem Färbeapparat (AHIBA) bei 20°C mit einer Flotte behandelt, die
0,03 g eines optischen Aufhellers der Formel 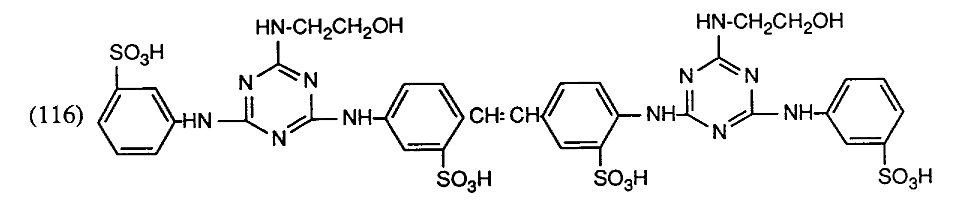
0,5 g Natriumsulfat
0,3 g der gemäss Beispiel 2 hergestellten Zubereitung

in 400 ml Wasser enthält. Hierauf wird die Temperatur im Verlauf von 30 Minuten auf 80°C erhöht, worauf die Baumwolle 30 Minuten bei dieser Temperatur behandelt wird. Anschliessend wird das Bad auf 50°C abgekühlt und die Ware gespült und getrocknet. Man erhält ein aufgehelltes Gewebe, das keine Falten zeigt.

### Beispiel 9

100 kg Gewebe aus Polyester/Baumwolle (1:1) werden bei 80°C während 20 Minuten auf einer Strangwaschmaschine bei einem Flottenverhältnis von 1:20 mit einer Flotte gewaschen, welche folgende Zusätze enthält:
- 2,5 g/l: eines Gemisches aus Kokosfettsäurediethanolamid und 1-Benzyl-2-heptadecylbenzimidazoldisulfonsäure Natriumsalz (1:2)
- 2 g/l: Natriumcarbonat und
- 2 g/l: der gemäss Beispiel 2 hergestellten Zubereitung.

Anschliessend wird das Gewebe kalt und warm gespült. Das Gewebe zeigt nach der Wäsche praktisch keine Faltenbildung.

Der Friktionswert beträgt 39 %.

## Patentansprüche

1. Gleitmittel enthaltende wässrige Zubereitungen von Mischpolymerisaten, welche durch Polymerisation von
(A) 70 bis 95 Gew.% eines Monomerengemisches aus
(a) 20 bis 90 Gew.% einer ethylenisch ungesättigten Carbonsäure oder eines entsprechenden Amids,
(b) 10 bis 80 Gew.% einer sulfonierten, aliphatischen oder aromatischen Monovinylverbindung und
(c) 0 bis 25 Gew.% N-Vinylpyrrolidon oder eines N-Vinylsubstituierten Amids einer gesättigten aliphatischen Monocarbonsäure in Gegenwart von
(B) 5 bis 30 Gew.% eines Polyols, dessen Hydroxylgruppen mit einer Fettsäure von 8 bis 26 Kohlenstoffatomen verestert sind,
wobei sich die Summen von (A) und (B) bzw. (a), (b) und (c) jeweils zu 100% ergänzen, erhältlich sind.

2. Zubereitungen gemäss Anspruch 1, dadurch gekennzeichnet, dass sie aus 30 bis 90 Gew.-% des Monomeren (a) und 10 bis 70 Gew.-% des Monomeren (b) erhältlich sind.

3. Zubereitungen gemäss einem der Ansprüche 1 und 2, dadurch gekennzeichnet, dass das Monomer (a) eine Monocarbonsäure oder deren Amide mit 3 bis 5 Kohlenstoffatomen ist.

4. Zubereitungen gemäss einem der Ansprüche 1 bis 3, dadurch gekennzeichnet, dass das Monomer (a) Acrylsäure, Acrylamid oder deren Mischung ist.

5. Zubereitungen gemäss einem der Ansprüche 1 bis 4, dadurch gekennzeichnet, dass das Monomer (b) Vinylsulfonsäure, Allylsulfonsäure, 3-Acrylamidopropansulfonsäure, 2-Acrylamido-2-Acrylamido-2-methylpropansulfonsäure, 3-Methacrylamidopropansulfonsäure, 3-Sulfopropylacrylat, 3-Sulfopropylmethacrylat, Bis-(3-sulfopropylitaconat), 3-Allyloxy-2-hydroxypropylsulfonsäure oder 4-Styrolsulfonsäure ist.

6. Zubereitungen gemäss einem der Ansprüche 1 bis 5, dadurch gekennzeichnet, dass das Monomer (b) 2-Acrylamido-2-methylpropansulfonsäure ist.

7. Zubereitungen gemäss einem der Ansprüche 1 bis 6, dadurch gekennzeichnet, dass das Monomer (c) N-Vinylpyrrolidon oder N-Vinyl-N-methylacetamid ist.

8. Zubereitungen gemäss einem der Ansprüche 1 bis 7, dadurch gekennzeichnet, dass die Komponente (B) ein Diester von Polyalkylenglykolen aus 3 bis 100 Mol Alkylenoxid, vorzugsweise Ethylenoxid ist.

9. Zubereitungen gemäss einem der Ansprüche 1 bis 8, dadurch gekennzeichnet, dass das Polyalkylenglykol mit einer Fettsäure von 12 bis 22 Kohlenstoffatomen verestert ist.

10. Zubereitungen gemäss einem der Ansprüche 8 und 9, dadurch gekennzeichnet, dass das Polyalkylenglykol mit Stearinsäure verestert ist.

11. Zubereitungen gemäss einem der Ansprüche 8 bis 10, dadurch gekennzeichnet, dass das Polyalkylenglykol ein Molekulargewicht von 300 bis 4400, vorzugsweise 300 bis 1000 hat.

12. Zubereitungen gemäss einem der Ansprüche 1 bis 7, dadurch gekennzeichnet, dass die Komponente (B) ein 3 bis 6 Kohlenstoffatome aufweisender, drei- bis sechswertiger aliphatischer Alkohol ist, der mit einer Fettsäure von 8 bis 26 Kohlenstoffatomen, vorzugsweise 12 bis 22 Kohlenstoffatomen verestert ist.

13. Zubereitungen gemäss Anspruch 12, dadurch gekennzeichnet, dass die Komponente (B) Trishydroxymethylpropantristearat oder Trishydroxymethylpropantribehenat ist.

14. Zubereitungen gemäss einem der Ansprüche 1 bis 13, dadurch gekennzeichnet, dass sie aus 75 bis 95 Gew.-% des Monomergemisches (A) und 5 bis 25 Gew.-% des veresterten Polyols(B) erhältlich sind.

15. Zubereitungen gemäss einem der Ansprüche 1 bis 14, dadurch gekennzeichnet, dass das Monomergemisch (A) aus 35 bis 85 Gew.-% der ethylenisch ungesättigten Carbonsäure oder des ethylenisch-ungesättigten Carbonsäureamids (a) und 15 bis 65 Gew.-% der sulfonierten Vinylverbindung (b) besteht.

16. Zubereitungen gemäss einem der Ansprüche 1 bis 15, dadurch gekennzeichnet, dass sie aus 5 bis 25 Gew.-% des veresterten Polyols als Komponente (B), 35 bis 75 Gew.-% Acrylsäure oder Acrylamid als Monomer (a) und 20 bis 40 Gew.-% der sulfonierten Vinylverbindung als Monomer (b), wobei die Summe der Komponenten 100% beträgt, erhältlich sind.

17. Zubereitungen gemäss Anspruch 16, dadurch gekennzeichnet, dass das veresterte Polyol ein diverestertes Polyethylenoxidaddukt mit einem Molekulargewicht von 300 bis 1000 ist.

18. Zubereitungen gemäss einem der Ansprüche 16 und 17, dadurch gekennzeichnet, dass das Monomer (b) 2-Acrylamido-2-methylpropansulfonsäure ist.

19. Verwendung der Zubereitungen gemäss einem der Ansprüche 1 bis 18 als Faltenverhinderungsmittel beim Färben, optischen Aufhellen oder Waschen von Textilmaterialien.

20. Verfahren zum Färben bzw. optischen Aufhellen von Cellulosefasern, natürliche oder synthetische Polyamidfasern. Polyacrylnitrilfasern oder Polyesterfasern enthaltenden Textilmaterialien mit entsprechend geeigneten Farbstoffen bzw. optischen Aufhellern, dadurch gekennzeichnet, dass man die Textilmaterialien in Gegenwart einer Zubereitung gemäss einem der Ansprüche 1 bis 18 färbt bzw. optisch aufhellt.

21. Verfahren gemäss Anspruch 20, dadurch gekennzeichnet, dass Cellulosefasern, synthetische Polyamidfasern oder Polyesterfasern enthaltende Textilmaterialien gefärbt bzw. optisch aufgehellt werden.

22. Verfahren gemäss Anspruch 21, dadurch gekennzeichnet, dass Polyesterfasern enthaltende Textilmaterialien mit Dispersionsfarbstoffen bei einer Temperatur von 70 bis 140°C, vorzugsweise 80 bis 135°C, insbesondere 110 bis 135°C gefärbt werden.

## Claims

1. A lubricant-containing aqueous preparation of copolymers obtainable by polymerisation of
(A) 70 to 95 % by weight of a monomer mixture of
(a) 20 to 90 % by weight of an ethylenically unsaturated carboxylic acid or of a corresponding amide,
(b) 10 to 80 % by weight of a sulfonated, aliphatic or aromatic monovinyl compound, and
(c) 0 to 25 % by weight of N-vinylpyrrolidone or of an N-vinyl-substituted amide of a saturated aliphatic monocarboxylic acid in the presence of
(B) 5 to 30 % by weight of a polyol whose hydroxyl groups have been esterified with a fatty acid of 8 to 26 carbon atoms,
the sum totals of (A) and (B) on the one hand and (a), (b) and (c) on the other each adding up to 100 %.

2. A preparation according to claim 1, obtainable from 30 to 90 % by weight of monomer (a) and 10 to 70 % by weight of monomer (b).

3. A preparation according to either one of claims 1 and 2, wherein monomer (a) is a monocarboxylic acid or amide with 3 to 5 carbon atoms.

4. A preparation according to any one of claims 1 to 3, wherein monomer (a) is acrylic acid, acrylamide or a mixture thereof.

5. A preparation according to any one of claims 1 to 4, wherein mononer (b) is vinylsulfonic acid, allylsulfonic acid, 3-acrylamidopropanesulfonic acid, 2-acrylamido-2-methylpropanesulfonic acid, 3-methacrylamidopropanesulfonic acid, 3-sulfopropyl acrylate, 3-sulfopropyl methacrylate, bis(3-sulfopropyl) itaconate, 3-allyloxy-2-hydroxypropylsulfonic acid or 4-styrenesulfonic acid.

6. A preparation according to any one of claims 1 to 5, wherein monomer (b) is 2-acrylamido-2-methylpropanesulfonic acid.

7. A preparation according to any one of claims 1 to 6, wherein monomer (c) is N-vinylpyrrolidone or N-vinyl-N-methylacetamide.

8. A preparation according to any one of claims 1 to 7, wherein component (B) is a diester of polyalkylene glycols formed from 3 to 100 mol of alkylene oxide, preferably ethylene oxide.

9. A preparation according to any one of claims 1 to 8, wherein the polyalkylene glycol has been esterified with a fatty acid of from 12 to 22 carbon atoms.

10. A preparation according to either one of claims 8 and 9, wherein the polyalkylene glycol has been esterified with stearic acid.

11. A preparation according to any one of claims 8 to 10, wherein the polyalkylene glycol has a molecular weight of 300 to 4400, preferably 300 to 1000.

12. A preparation according to any one of claims 1 to 7, wherein component (B) is a trihydric to hexahydric aliphatic alcohol of 3 to 6 carbon atoms which has been esterified with a fatty acid of 8 to 26 carbon atoms, preferably 12 to 22 carbon atoms.

13. A preparation according to claim 12, wherein component (B) is trishydroxymethylpropane tristearate or trishydroxymethylpropane tribehenate.

14. A preparation according to any one of claims 1 to 13, obtainable from 75 to 95 % by weight of monomer mixture (A) and 5 to 25 % by weight of esterified polyol (B).

15. A preparation according to any one of claims 1 to 14, wherein the monomer mixture (A) consists of 35 to 85 % by weight of the ethylenically unsaturated carboxylic acid or of the ethylenically unsaturated carboxamide (a) and 15 to 65 % by weight of the sulfonated vinyl compound (b).

16. A preparation according to any one of claims 1 to 15, obtainable from 5 to 25 % by weight of the esterified polyol as component (B), 35 to 75 % by weight of acrylic acid or acrylamide as monomer (a) and 20 to 40 % by weight of the sulfonated vinyl compound as monomer (b), the sum total of the components being 100 %.

17. A preparation according to claim 16, wherein the esterified polyol is a diesterified polyethylene oxide adduct having a molecular weight of 300 to 1000.

18. A preparation according to either one of claims 16 and 17, wherein monomer (b) is 2-acrylamido-2-methylpropanesulfonic acid.

19. The use of a preparation according to any one of claims 1 to 18 as crease preventive in the dyeing, whitening or washing of textile material.

20. A process for dyeing or whitening textile material containing cellulose fibres, natural or synthetic polyamide fibres, polyacrylonitrile fibres or polyester fibres with appropriate dyes or fluorescent whitening agents, which comprises dyeing or whitening the textile material in the presence of a preparation according to any one of claims 1 to 18.

21. A process according to claim 20, wherein textile material containing cellulose fibres, synthetic polyamide fibres or polyester fibres is dyed or whitened.

22. A process according to claim 21, wherein textile material containing polyester fibres is dyed with disperse dyes at a temperature of 70 to 140°C, preferably 80 to 135°C, in particular 110 to 135°C.

## Revendications

1. Préparations aqueuses, contenant un lubrifiant, de copolymères que l'on peut obtenir par polymérisation de :
A) 70 à 95 % en poids d'un mélange de monomères contenant
a) de 20 à 90 % en poids d'un acide carboxylique à insaturation éthylénique ou d'un amide correspondant,
b) de 10 à 80 % en poids d'un composé monovinylique sulfoné, aliphatique ou aromatique, et
c) de 0 à 25 % en poids de N-vinyl-pyrrolidone ou d'un N-vinylamide d'un acide monocarboxylique aliphatique saturé, en présence de
B) 5 à 30 % en poids d'un polyol dont les groupes hydroxy sont estérifiés avec un acide gras comportant de 8 à 26 atomes de carbone, les quantités de (A) et (B), ainsi que celles de (a), (b) et (c), faisant dans chaque cas 100 % au total.

2. Préparations conformes à la revendication 1, caractérisées en ce qu'on les obtient à partir de 30 à 90 % en poids de monomère (a) et de 10 à 70 % en poids de monomère (b).

3. Préparations conformes à l'une des revendications 1 et 2, caractérisées en ce que le monomère (a) est un acide monocarboxylique comportant de 3 à 5 atomes de carbone, ou un amide dérivé d'un tel acide.

4. Préparations conformes à l'une des revendications 1 à 3, caractérisées en ce que le monomère (a) est de l'acide acrylique, de l'acrylamide ou un mélange de ceux-ci.

5. Préparations conformes à l'une des revendications 1 à 4, caractérisées en ce que le monomère (b) est de l'acide vinylsulfonique, de l'acide allylsulfonique, de l'acide 3-acrylamido-propanesulfonique, de l'acide 2-acrylamido-2-méthyl-propanesulfonique, de l'acide 3-méthacrylamido-propanesulfonique, de l'acrylate de 3-sulfopropyle, du méthacrylate de 3-sulfopropyle, de l'itaconate de bis(3-sulfopropyle), de l'acide 3-allyloxy-2-hydroxy-propanesulfonique ou de l'acide 4-styrènesulfonique.

6. Préparations conformes à l'une des revendications 1 à 5, caractérisées en ce que le monomère (b) est de l'acide 2-acrylamido-2-méthyl-propanesulfonique.

7. Préparations conformes à l'une des revendications 1 à 6, caractérisées en ce que le monomère (c) est de la N-vinyl-pyrrolidone ou du N-vinyl-N-méthyl-acétamide.

8. Préparations conformes à l'une des revendications 1 à 7, caractérisées en ce que le composant (B) est un diester de polyalkylèneglycol comportant de 3 à 100 motifs d'oxyde d'alkylène, de préférence d'oxyde d'éthylène.

9. Préparations conformes à l'une des revendications 1 à 8, caractérisées en ce que le polyalkylèneglycol est estérifié avec un acide gras comportant de 12 à 22 atomes de carbone.

10. Préparations conformes à l'une des revendications 8 et 9, caractérisées en ce que le polyalkylèneglycol est estérifié avec de l'acide stéarique.

11. Préparations conformes à l'une des revendications 8 à 10, caractérisées en ce que la masse molaire du polyalkylèneglycol vaut de 300 à 4400, et de préférence de 300 à 1000.

12. Préparations conformes à l'une des revendications 1 à 7, caractérisées en ce que le composant (B) est un polyol aliphatique trifonctionnel à hexafonctionnel, comportant de 3 à 6 atomes de carbone, qui est estérifié avec un acide gras comportant de 8 à 26 atomes de carbone, et de préférence, de 12 à 22 atomes de carbone.

13. Préparations conformes à la revendication 12, caractérisées en ce que le composant (B) est du tristéarate de tris(hydroxyméthyl)propane ou du tribéhénate de tris(hydroxyméthyl)propane.

14. Préparations conformes à l'une des revendications 1 à 13, caractérisées en ce qu'elles sont obtenues à partir de 75 à 95 % en poids du mélange de monomères (A) et de 5 à 25 % en poids du polyol estérifié (B).

15. Préparations conformes à l'une des revendications 1 à 14, caractérisées en ce que le mélange de monomères (A) est constitué de 35 à 85 % en poids d'un acide carboxylique à insaturation éthylénique ou d'un amide d'acide carboxylique à insaturation éthylénique (composant (a)) et de 15 à 65 % en poids de composé vinylique sulfoné (composant (b)).

16. Préparations conformes à l'une des revendications 1 à 15, caractérisées en ce qu'elles sont obtenues à partir de 5 à 25 % en poids d'un polyol estérifié (composant (B)), de 35 à 75 % en poids d'acide acrylique ou d'acrylamide (monomère (a)) et de 20 à 40 % en poids de composé vinylique sulfoné (monomère (b)), les quantités de ces divers composants faisant au total 100 %.

17. Préparations conformes à la revendication 16, caractérisées en ce que le polyol estérifié est un diester d'un produit de polyaddition d'oxyde d'éthylène, dont la masse molaire vaut de 300 à 1000.

18. Préparations conformes à l'une des revendications 16 et 17, caractérisées en ce que le monomère (b) est de l'acide 2-acrylamido-2-méthyl-propanesulfonique.

19. Emploi de préparations conformes à l'une des revendications 1 à 18, comme agents d'apprêt infroissable (empêchant la formation de plis), dans des opérations de teinture, d'azurage optique ou de lavage de matières textiles.

20. Procédé de teinture ou d'azurage optique de matières textiles contenant des fibres cellulosiques, des fibres de polyamides naturelles ou synthétiques, des fibres de polyacrylonitrile ou des fibres de polyesters, respectivement à l'aide de colorants ou d'agents d'azurage optique appropriés, caractérisé en ce qu'on effectue la teinture ou l'azurage optique de la matière textile en présence d'une préparation conforme à l'une des revendications 1 à 18.

21. Procédé conforme à la revendication 20, caractérisé en ce qu'on effectue la teinture ou l'azurage optique de matières textiles contenant des fibres cellulosiques, des fibres de polyamides synthétiques ou des fibres de polyesters.

22. Procédé conforme à la revendication 21, caractérisé en ce qu'on effectue la teinture de matières textiles contenant des fibres de polyesters à l'aide de colorants dispersés, à une température de 70°C à 140°C, de préférence de 80°C à 135°C, et en particulier de 110°C à 135°C.
